# FASCICULE DE BREVET EUROPEEN

(11) **EP 2 677 957 B1**
(45) Date de publication et mention de la délivrance du brevet: **03.07.2019**
(21) Numéro de dépôt: 12711938.6
(22) Date de dépôt: 24.02.2012
(51) Int. Cl.: A61C 5/42

(54) **INSTRUMENT CANALAIRE DU TYPE ALÉSOIR**
REIBAHLEN-WURZELKANALINSTRUMENT
REAMER ROOT CANAL INSTRUMENT

(30) Priorité: 25.02.2011 FR 1151525
(43) Date de publication de la demande: 01.01.2014
(73) Titulaire: Micro-Mega International Manufactures, 25000 Besancon (FR)
(72) Inventeur: MORDENIZ, Julien, F-25000 Besancon (FR); EL ABED, Rashid, Dubai (AE)
(74) Mandataire: Rhein, Alain
(86) Numéro de dépôt international: PCT/FR2012/050394
(87) Numéro de publication internationale: WO 2012/114052

(56) Documents cités:
- EP-A2- 1 184 004
- WO-A1-2011/042662
- FR-A1- 2 935 260
- FR-A1- 2 951 067
- US-A1- 2004 023 186
- US-A1- 2005 272 004
- US-A1- 2010 233 648
- US-B1- 6 702 579

## Description

### Domaine technique et état de l'art

L'invention concerne un instrument canalaire du type alésoir dentaire comportant une zone de travail sensiblement cylindrique ou conique selon un axe longitudinal, l'instrument comprenant X goujures hélicoïdales, formant X lèvres de coupes hélicoïdales, une lèvre de coupe étant formée de l'intersection de deux goujures successives. Un tel instrument est utilisé en endodontie pour la préparation des canaux dentaires.

Le document EP0801930 décrit un tel alésoir comprenant trois lèvres de coupe dont les sommets forment les sommets d'un triangle équilatéral. Un tel instrument donne satisfaction sauf lorsque le canal à préparer a une section non circulaire. De plus, lors de sa progression dans le canal, l'instrument a tendance à visser, à engager dans les parois du canal, ce qui endommage les parois du canal et risque de blesser le patient objet du traitement. Le document EP1214013 décrit un alésoir comprenant trois lèvres de coupe dont les sommets forment les sommets d'un triangle isocèle. La section dissymétrique de cet instrument le rend plus efficace lorsque la section du canal n'est pas circulaire, toutefois, lors de sa progression dans le canal, l'instrument a encore tendance à engager, à visser.

Le document US 2004/023186 A1 décrit un instrument canalaire du type alésoir dentaire comportant une zone de travail conique selon un axe longitudinal de l'instrument, la zone de travail pouvant comprendre 3 goujures hélicoïdales formant 3 lèvres de coupes hélicoïdales, une lèvre de coupe étant formée de l'intersection de deux goujures successives; sur une section transversale de l'instrument, les angles de coupes peuvent être positifs, négatifs ou neutres.

Le problème du vissage est crucial pour les instruments canalaires à hélice. En effet, par conception, ces instruments ont une tendance naturelle à visser du fait de la présente de goujures hélicoïdales. Or il est impératif de limiter au mieux le risque de vissage, pour ne pas blesser le patient et / ou endommager le canal radiculaire.

### Description de l'invention

L'invention propose un nouvel instrument canalaire, ne présentant pas tout ou partie des inconvénients des instruments antérieurs. Plus précisément, l'invention propose un instrument type alésoir dentaire comportant une zone de travail sensiblement cylindrique ou conique selon un axe longitudinal de l'instrument ; la zone de travail comprend X goujures hélicoïdales formant X lèvres de coupes hélicoïdales, une lèvre de coupe étant formée de l'intersection de deux goujures successives, avec X supérieur ou égal à trois ; Selon l'invention, sur toutes les sections transversales de la zone de travail de l'instrument, les angles entre deux lèvres de coupe successives, mesurés par rapport à l'axe longitudinal de l'instrument, sont tous différents.

Toutes les lèvres de coupe sont positionnées sur des cercles concentriques, centrés sur l'axe longitudinal, et de diamètre tous différents. Cette configuration déforme un peu plus la section transversale et augmente encore sa dissymétrie.

Dans un instrument selon l'invention, les angles de coupe des lèvres de coupe sont tous différents. Pour une lèvre de coupe, formée de l'intersection de deux goujures successives, l'angle de coupe est, dans le plan d'une section transversale de la zone de travail, l'angle formé par la tangente de la goujure située du côté du sens de coupe et un rayon passant par l'arête de coupe et l'axe de l'instrument.

Avec de tels angles, la section transversale ne présente aucun axe de symétrie, aucun centre de symétrie, le degré de dissymétrie de la section transversale est encore augmenté. Par rapport aux instruments antérieurs, on augmente ainsi le degré de dissymétrie de la section de l'instrument. On augmente ainsi les possibilités de reptation de l'instrument lors de sa progression à l'intérieur du canal. Les arêtes de l'instrument ne viennent pas en contact en même temps avec la paroi du canal, ne coupent pas en même temps la paroi du canal. L'instrument pénètre plus facilement dans le canal, il progresse en boitant, ce qui limite les risques de vissage, les risques d'engagement de l'instrument.

Pour augmenter encore le degré de dissymétrie de la section de l'instrument, les angles entre deux lèvres de coupe successives, mesurés par rapport à un centre de gravité de la section transversale, peuvent également être tous différents.

Dans une variante, les angles entre deux lèvres de coupe successives, mesurés par rapport à l'axe longitudinal de l'instrument ou par rapport au centre de gravité de la section transversale, peuvent être constants sur une portion de la zone de travail de l'instrument. Dans une autre variante, les angles entre deux lèvres de coupe, mesurés par rapport à l'axe longitudinal de l'instrument ou par rapport au centre de gravité de la section transversale, sont variables sur une portion de la zone de travail l'instrument. Une portion de l'instrument peut correspondre ici à la longueur totale de la zone de travail de l'instrument ou à une partie seulement de la zone de travail de l'instrument. En variant les angles entre deux lèvres, on augmente encore le degré de dissymétrie de l'instrument et donc son efficacité.

On crée ainsi une dissymétrie supplémentaire dans la manière dont les lèvres de coupe coupent la paroi du canal, ce qui limite encore les risques de vissage et d'engagement de l'instrument dans la paroi du canal.

Egalement, toujours avec l'objectif d'augmenter la dissymétrie, il est possible de réaliser des angles d'hélices tous différents au niveau d'une même section transversale de l'instrument. Un angle d'hélice est un angle entre l'axe longitudinal de l'instrument et une tangente à une lèvre de coupe, dans la section transversale considérée.

Dans une variante de l'invention, l'instrument comprend X = 3 goujures hélicoïdales. Les sommets des lèvres de coupe forment ainsi un triangle irrégulier. Dans une autre variante, l'instrument comprend X = 4 goujures hélicoïdales, les sommets des lèvres de coupe forment ainsi quadrilatère irrégulier. Il est possible de réaliser des instruments comprenant un plus grand nombre de goujures, mais la difficulté de réalisation de l'instrument augmente avec le nombre de goujures.

L'invention propose également un procédé de réalisation d'un instrument canalaire selon l'invention dans une tige cylindrique ou conique. La tige est par exemple en métal ou alliage métallique choisi pour ses propriétés mécaniques de résistance à la flexion et de mémoire de forme notamment, par exemple en Nickel-Titane. Le procédé comprend une succession d'étapes d'usinage par meulage d'une goujure à une profondeur prédéfinie, les profondeurs prédéfinies étant toutes différentes d'une étape d'usinage à l'autre, et d'étapes de rotation de la tige devant la meule d'usinage. Par exemple, pour la réalisation d'un instrument à trois goujures hélicoïdales, le procédé comprend :
- un premier usinage d'une goujure hélicoïdale selon l'axe longitudinal de la tige, à une première profondeur,
- une rotation de la tige selon l'axe longitudinal de l'instrument d'un premier angle,
- un deuxième usinage d'une goujure hélicoïdale selon l'axe longitudinal de la tige, à une deuxième profondeur différente de la première profondeur,
- une rotation de la tige selon l'axe longitudinal d'un deuxième angle,
- un troisième usinage d'une goujure hélicoïdale selon l'axe longitudinal de la tige, à une troisième profondeur différente de la première profondeur et de la deuxième profondeur.

Pour réaliser des angles entre deux lèvres de coupe successives tous différents, on choisit un deuxième angle différent du premier angle et différent de 360° moins deux fois le premier angle. Ainsi, une section transversale de l'instrument obtenu a une forme sensiblement triangulaire (triangle passant par les sommets des lèvres de coupe), non isocèle, non équilatéral, ne présentant aucun axe de symétrie et ne présentant aucun centre de symétrie.

### Brève description des figures

L'invention sera mieux comprise, et d'autres caractéristiques et avantages de l'invention apparaîtront à la lumière de la description qui suit d'un exemple de réalisation d'un instrument selon l'invention. Cet exemple est donné à titre non limitatif. La description est à lire en relation avec les dessins annexés dans lesquels :
- la figure 1 est une vue de face d'un instrument selon l'invention,
- les figures 2a, 2b sont des coupes A-A de la zone de travail de l'instrument de la figure 1,
- les figures 3a et 4a sont respectivement une vue de face et une coupe B-B de la zone de travail,
- les figures 3b et 4b sont respectivement une vue de face et une coupe B-B de la zone de travail, décalées (instrument tourné selon son axe longitudinal) d'un premier angle par rapport aux figures 3a et 4a
- les figures 3c et 4c sont respectivement une vue de face et une coupe B-B de la zone de travail, décalées d'un deuxième angle par rapport aux figures 3b et 4b.

### Description d'un mode de réalisation de l'invention

Comme dit précédemment, l'invention concerne un instrument canalaire du type alésoir dentaire comportant une zone de travail 1 sensiblement cylindrique ou conique selon un axe longitudinal de l'instrument, c'est-à-dire l'axe longitudinal de la tige cylindrique ou conique dans laquelle l'instrument est taillé. L'axe longitudinal est droit.

Dans l'exemple représenté, l'instrument comprend X = 3 goujures hélicoïdales G1, G2, G3, formant X = 3 lèvres de coupe S1, S2, S3 hélicoïdales, une lèvre de coupe étant formée de l'intersection de deux goujures successives. Dans l'exemple représenté, l'instrument comprend également un manche adapté pour fixer l'instrument dans un porte-instrument tel qu'une pièce à main ou un contre-angle.

Selon l'invention, sur une section transversale de l'instrument (cf coupe A-A ou coupe B-B), dans un plan perpendiculaire à l'axe longitudinal de l'instrument, les angles αI, βI, γI entre deux lèvres de coupe successives, mesurés par rapport à l'axe longitudinal (point I, intersection entre une section transversale et l'axe longitudinal), sont tous différents.

Dans l'exemple représenté également, les angles αK, βK, γK entre deux lèvres de coupe successives, mesurés par rapport à un centre de gravité K de la section transversale, sont tous différents. Ainsi, contrairement aux instruments antérieurs, le triangle dont les sommets passent par les lèvres S1, S2, S3 n'est ni équilatéral, ni isocèle ; plus précisément, ce triangle ne présente aucun axe de symétrie, aucun centre de symétrie.

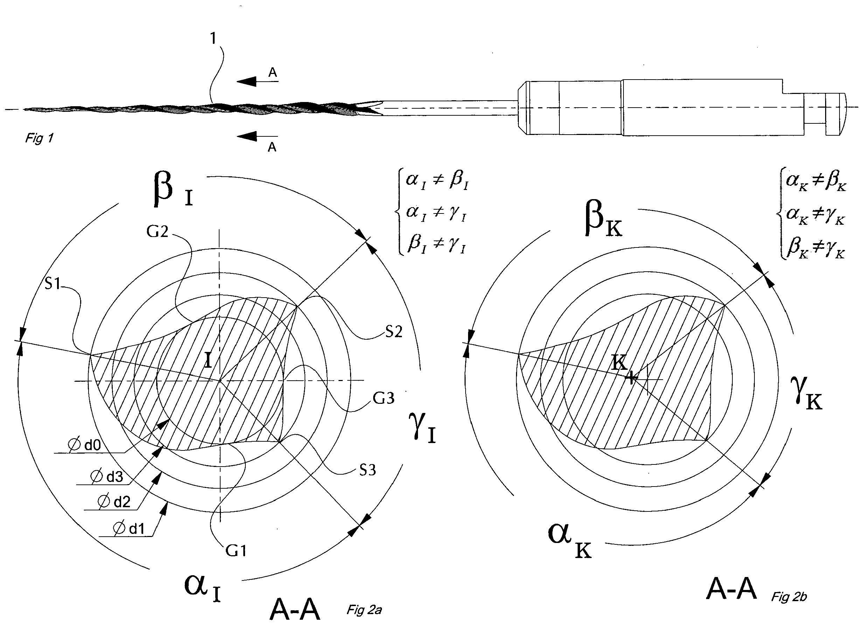

A noter que, sur les figures 2a, 2b, la même coupe A-A est représentée deux fois, simplement pour représenter plus clairement d'une part les angles αI, βI, γI entre deux lèvres de coupe successives, mesurés par rapport à l'axe longitudinal, et d'autre part les angles αK, βK, γK entre deux lèvres de coupe successives, mesurés par rapport à un centre de gravité K de la section transversale.

On notera que, pour les instruments selon l'invention, le centre de gravité K d'une section est décalé par rapport à l'axe longitudinal de l'instrument, du fait de la forme spécifique de la section transversale. Le centre de gravité K de chaque section transversale se trouve sur une courbe de type hélice.

Dans l'exemple représenté également, les angles entre les lèvres de coupe, αI, βI, γI par rapport à l'axe longitudinal ou αK, βK, γK par rapport au centre de gravité K de la section transversale, sont différents les uns des autres, mais sont constants sur toutes les sections de la zone de travail, sur toute la longueur de la zone de travail. A titre d'exemple, un angle al ou αK de l'ordre de 140 à 180 degrés, un angle βI, βK de l'ordre de 120 à 160 degrés et un angle γI ou γK de l'ordre de 20 à 100 degrés donnent un instrument particulièrement efficace pour préparer un canal dentaire, en vissant, en engagent le moins possible dans la paroi du canal.

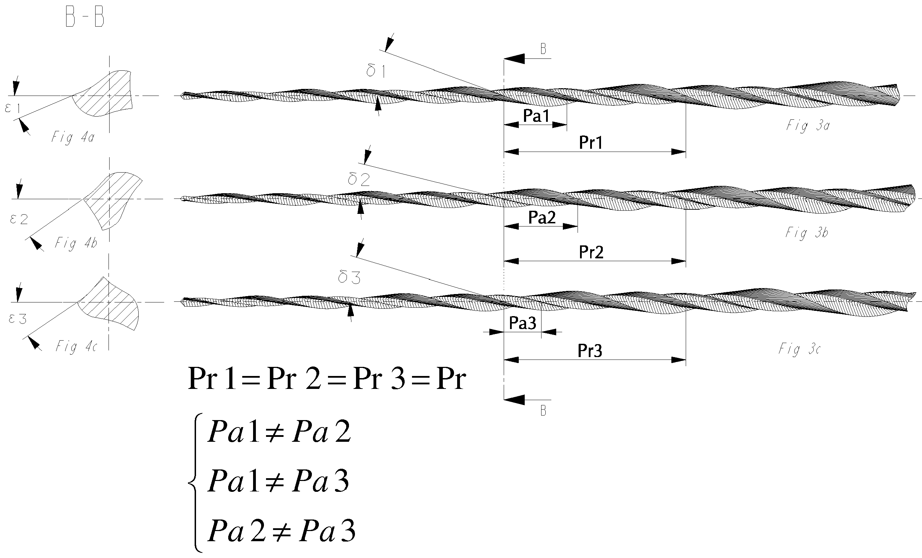

Le pas réel Pr1, Pr2, Pr3 d'une lèvre de coupe est la distance axiale entre deux profils homologues d'une même lèvre de coupe, c'est-à-dire la projection sur l'axe longitudinal de la distance parcourue lorsqu'on se déplace le long d'une lèvre de coupe d'un angle de 360°. Les pas réels de toutes les lèvres de coupe S1, S2, S3 respectivement sont identiques Pr1 = Pr2 = Pr3 = Pr (figures 3a à 3c).

Le pas apparent d'une lèvre de coupe est la distance axiale entre deux profils homologues de deux lèvres de coupe successives. Pa1 = Pr ^{∗} (αI/360) ; Pa2 = Pr ^{∗} (βI/360) ; Pa3 = Pr ^{∗} (γI/360). Les angles αI, βI, γI entre les lèvres de coupe étant tous différents, les pas apparents Pa1, Pa2, Pa3 sont également tous différents les uns des autres.

Egalement, dans l'exemple représenté, toutes les lèvres de coupe sont positionnées sur des cercles concentriques, de centre I, et de diamètres Φd1, Φd2, Φd3 tous différents. Les cercles sont centrés sur l'axe longitudinal de l'instrument, c'est-à-dire l'axe longitudinal de la tige cylindrique ou conique initiale dans laquelle l'instrument est taillé.

Dans l'exemple représenté encore, sur une section transversale donnée, les angles d'hélice δ1, δ2, δ3 sont tous différents (figures 3a à 3c). Un angle d'hélice est un angle entre l'axe longitudinal de l'instrument et une tangente à une lèvre de coupe, dans la section transversale considérée.

Enfin, sur une section transversale donnée (ici les coupes A-A ou B-B), les angles de coupe sont tous différents. Un angle de coupe. Pour rappel, pour une lèvre de coupe donnée, formée de l'intersection de deux goujures successives, l'angle de coupe est, dans le plan d'une section transversale de la zone de travail, l'angle formé par la tangente de la goujure située du côté du sens de coupe et un rayon (perpendiculaire de la surface à usiner) passant par l'arête de coupe et l'axe de l'instrument (point I). Sur les figures 4a à 4c, les angles de coupe sont les angles ε1, ε2 et ε3.

## Revendications

1. Instrument canalaire du type alésoir dentaire comportant une zone de travail sensiblement cylindrique ou conique selon un axe longitudinal de l'instrument, la zone de travail comprenant X goujures hélicoïdales (G1, G2, G3) formant X lèvres de coupes hélicoïdales (S1, S2, S3), une lèvre de coupe étant formée de l'intersection de deux goujures successives, avec X supérieur ou égal à trois, l'instrument étant **caractérisé en ce que**,
- sur toutes les sections transversales de la zone de travail de l'instrument, les angles (αI, βI, γI) entre deux lèvres de coupe successives (S1, S2, S3), mesurés par rapport à l'axe longitudinal de l'instrument, sont tous différents,
- les angles de coupe des lèvres de coupe (S1, S2, S3) sont tous différents,
- toutes les lèvres de coupe (S1, S2, S3) sont positionnées sur des cercles concentriques, centrés sur l'axe longitudinal et de diamètres (Φd1, Φd2, Φd3) tous différents.

2. Instrument selon la revendication 1 dans lequel, sur la section transversale de l'instrument, les angles (αK, βK, γK) entre deux lèvres de coupe successives, mesurés par rapport à un centre de gravité (K) de la section transversale, sont tous différents.

3. Instrument selon l'une des revendications 1 ou 2, dans lequel les angles entre deux lèvres de coupe successives, mesurés par rapport à l'axe longitudinal de l'instrument (I) ou par rapport au centre de gravité (K) de la section transversale, sont constants sur une portion de la zone de travail de l'instrument.

4. Instrument selon l'une des revendications 1 ou 2, dans lequel les angles entre deux lèvres de coupe successives, mesurés par rapport à l'axe longitudinal de l'instrument ou par rapport au centre de gravité de la section transversale, sont variables sur une portion de la zone de travail de l'instrument.

5. Instrument selon l'une des revendications précédentes dans lequel, dans une même section transversale, les angles d'hélices sont tous différents.

6. Instrument selon l'une des revendications précédentes, comprenant X = 3 goujures hélicoïdales.

7. Procédé de réalisation d'un instrument canalaire selon l'une des revendications précédentes dans une tige cylindrique ou conique, procédé comprenant une succession alternée d'étapes d'usinage par meulage d'une goujure à une profondeur prédéfinie, les profondeurs prédéfinies étant toutes différentes d'une étape d'usinage à l'autre, et d'étapes de rotation de la tige devant la meule d'usinage.

8. Procédé selon la revendication 7, pour réaliser un instrument à trois goujures hélicoïdales, le procédé comprend
• un premier usinage d'une goujure hélicoïdale selon l'axe longitudinal de la tige, à une première profondeur,
• une rotation de la tige selon l'axe longitudinal d'un premier angle,
• un deuxième usinage d'une goujure hélicoïdale selon l'axe longitudinal de la tige, à une deuxième profondeur différente de la première profondeur,
• une rotation de la tige selon l'axe longitudinal d'un deuxième angle,
• un troisième usinage d'une goujure hélicoïdale selon l'axe longitudinal de la tige, à une troisième profondeur différente de la première profondeur et de la deuxième profondeur.

9. Procédé selon l'une des revendications 7 ou 8, dans lequel le deuxième angle est différent du premier angle et est différent de 360° moins deux fois le premier angle.

## Patentansprüche

1. Instrument zur Aufbereitung von Zahnwurzelkanälen des Typs Zahnwurzelbohrer, aufweisend einen gemäß einer Längsachse des Instruments etwa zylindrischen oder konischen Arbeitsbereich, wobei der Arbeitsbereich X schraubenförmige Spannuten (G1, G2, G3) umfasst, die X schraubenförmige Schneidlippen (S1, S2, S3) bilden, wobei eine Schneidlippe vom Schnittpunkt zweier aufeinanderfolgender Spannuten gebildet ist, mit X größer oder gleich drei, wobei das Instrument **dadurch gekennzeichnet ist, dass**
- über alle Querschnitte des Arbeitsbereichs des Instruments die Winkel (αI, βI, γI) zwischen zwei aufeinanderfolgenden Schneidlippen (S1, S2, S3), gemessen in Bezug auf die Längsachse des Instruments, alle unterschiedlich sind,
- die Schneidwinkel der Schneidlippen (S1, S2, S3) alle unterschiedlich sind,
- alle Schneidlippen (S1, S2, S3) auf konzentrischen Kreisen positioniert sind, zentriert auf der Längsachse und mit Durchmessern (Φd1, Φd2, Φd3), die alle unterschiedlich sind.

2. Instrument nach Anspruch 1, wobei, auf dem Querschnitt des Instruments, die Winkel (αK, βK, γK) zwischen zwei aufeinanderfolgenden Schneidlippen, gemessen in Bezug auf ein Schwerkraftzentrum (K) des Querschnitts, alle unterschiedlich sind.

3. Instrument nach einem der Ansprüche 1 oder 2, wobei die Winkel zwischen zwei aufeinanderfolgenden Schneidlippen, gemessen in Bezug auf die Längsachse des Instruments (I) oder in Bezug auf das Schwerkraftzentrum (K) des Querschnitts, über einen Abschnitt des Arbeitsbereichs des Instruments konstant sind.

4. Instrument nach einem der Ansprüche 1 oder 2, wobei die Winkel zwischen zwei aufeinanderfolgenden Schneidlippen, gemessen in Bezug auf die Längsachse des Instruments oder in Bezug auf das Schwerkraftzentrum des Querschnitts, über einen Abschnitt des Arbeitsbereichs des Instruments variabel sind.

5. Instrument nach einem der vorangehenden Ansprüche, wobei, in einem selben Querschnitt, die Schraubenwinkel alle unterschiedlich sind.

6. Instrument nach einem der vorangehenden Ansprüche, umfassend X = 3 schraubenförmige Spannuten.

7. Verfahren zur Herstellung eines Instrument zur Aufbereitung von Zahnwurzelkanälen nach einem der vorangehenden Ansprüche aus einem zylindrischen oder konischen Schaft, wobei das Verfahren eine alternierende Abfolge von Bearbeitungsschritten durch Schleifen einer Spannut in einer vorher festgelegten Tiefe, wobei die vorher festgelegten Tiefen von einem Bearbeitungsschritt zum anderen alle unterschiedlich sind, und Rotationsschritte des Schafts vor dem Bearbeitungsschleifkörper umfasst.

8. Verfahren nach Anspruch 7 zur Herstellung eines Instruments mit drei schraubenförmigen Spannuten, wobei das Verfahren umfasst
• eine erste Bearbeitung einer schraubenförmigen Spannut gemäß der Längsachse des Schafts in einer ersten Tiefe,
• eine Rotation des Schafts gemäß der Längsachse um einen ersten Winkel,
• eine zweite Bearbeitung einer schraubenförmigen Spannut gemäß der Längsachse des Schafts in einer zweiten Tiefe, die von der ersten Tiefe unterschiedlich ist,
• eine Rotation des Schafts gemäß der Längsachse um einen zweiten Winkel,
• eine dritte Bearbeitung einer schraubenförmigen Spannut gemäß der Längsachse des Schafts in einer dritten Tiefe, die von der ersten Tiefe und von der zweiten Tiefe unterschiedlich ist.

9. Verfahren nach einem der Ansprüche 7 oder 8, wobei der zweite Winkel von dem ersten Winkel unterschiedlich ist und um 360° minus zwei Mal der erste Winkel unterschiedlich ist.

## Claims

1. A root canal instrument of the dental reamer type including a substantially cylindrical or conical work zone along a longitudinal axis of the instrument, the work zone comprising X helical flutes (G1, G2, G3) forming X helical cutting lips (S1, S2, S3), one cutting lip being formed at the intersection of two successive flutes, with X greater than or equal to three, the instrument being **characterized in that**
- over all of the cross-sections of the work zone of the instrument, the angles (αI, βI, γI) between two successive cutting lips (S1, S2, S3), measured relative to the longitudinal axis of the instrument, are all different,
- the cutting angles of the cutting lips (S1, S2, S3) are all different,
- all of the cutting lips (S1, S2, S3) are positioned on concentric circles, centered on the longitudinal axis and with diameters (φd1, φd2, φd3) that are all different.

2. The instrument according to claim 1 wherein, on the cross-section of the instrument, the angles (αK, βK, γK) between two successive cutting lips, measured relative to a center of gravity (K) of the cross-section, are all different.

3. The instrument according to one of claims 1 or 2, wherein the angles between two successive cutting lips, measured relative to the longitudinal axis of the instrument (I) or relative to the center of gravity (K) of the cross-section, are constant over a portion of the work zone of the instrument.

4. The instrument according to one of claims 1 or 2, wherein the angles between two successive cutting lips, measured relative to the longitudinal axis of the instrument or relative to the center of gravity of the cross-section, are variable over a portion of the work zone of the instrument.

5. The instrument according to one of the preceding claims wherein, in a same cross-section, the helix angles are all different.

6. The instrument according to one of the preceding claims, comprising X = 3 helical flutes.

7. A method for producing a root canal instrument according to one of the preceding claims in a cylindrical or conical rod, the method comprising an alternating series of machining steps by grinding a flute with a predefined depth, the predefined depths all being different from one machining step to another, and steps for rotating the rod in front of the machining grinder.

8. The method according to claim 7, for producing an instrument with three helical flutes, the method comprising
• a first machining of a helical flute along the longitudinal axis of the rod, at a first depth,
• a rotation of the rod along the longitudinal axis by a first angle,
• a second machining of a helical flute along the longitudinal axis of the rod, at a second depth different from the first depth,
• a rotation of the rod along the longitudinal axis by a second angle,
• a third machining of a helical flute along the longitudinal axis of the rod, at a third depth different from the first depth and the second depth.

9. The method according to one of claims 7 or 8, wherein the second angle is different from the first angle and is different from 360° minus twice the first angle.
